Europäisches Patentamt

European Patent Office

Office européen des brevets

(19)

(11) EP 0 676 432 B1

(12) **FASCICULE DE BREVET EUROPEEN**

(45) Date de publication et mention
de la délivrance du brevet:
**27.01.1999 Bulletin 1999/04**

(51) Int Cl.$^6$: **C08G 18/65**, C09D 175/14

(21) Numéro de dépôt: **95400672.2**

(22) Date de dépôt: **27.03.1995**

(54) **Utilisation comme résine amortissante d'une formulation d'élastomère polyuréthanne à base de polyol polydiénique et d'huile de ricin**

Verwendung einer Polyurethan-Elastomer-Formulierung auf Basis von Polydien-Polyolen und Rizinusöl als Dämpfungsharz

Use of a polyurethane elastomer formulation on the basis of polydiene polyols and castor oil as a damping resin

(84) Etats contractants désignés:
**AT BE CH DE DK ES FR GB GR IE IT LI LU NL PT SE**

(30) Priorité: **06.04.1994 FR 9404036**

(43) Date de publication de la demande:
**11.10.1995 Bulletin 1995/41**

(73) Titulaire: **ELF ATOCHEM S.A.**
**92800 Puteaux, Hauts-de-Seine (FR)**

(72) Inventeur: **Flat, Jean-Jacques**
**F-27800 Saint Pierre de Salerne (FR)**

(56) Documents cités:
EP-A- 0 568 388          DE-A- 4 017 444
US-A- 4 603 188          US-A- 4 742 112

- CHEMICAL ABSTRACTS, vol. 102, no. 18, 6 Mai 1985, Columbus, Ohio, US; abstract no. 151032n, 'COATING COMPOSITIONS FOR METALS' page 91 ; & JP-A-59 197 466 (DAI-ICHI) 9 Novembre 1984

## Description

L'invention concerne l'utilisation comme résine amortissante d'une formulation d'élastomère polyuréthanne à base de polyol polydiénique et d'huile de ricin ayant des propriétés mécaniques dynamométriques et dynamiques (amortissantes) améliorées.

Le brevet russe SU 364646 décrit des compositions de polyuréthanne constituées de 5 à 25 parties en poids d'huile de ricin pour 100 parties en poids de polydiéne diol.

L'introduction d'huile de ricin contribue à améliorer de façon significative certaines propriétés mécaniques dynamométriques telles que la résistance à la rupture en traction.

Cependant on ne donne dans ce brevet aucune indication sur les propriétés mécaniques dynamiques des compositions obtenues.

La demande de brevet Japonaise JP 05039344 décrit des compositions de polyuréthanne à base de polydiénediols hydrogénés, d'huile de ricin et de plastifiant.

Ces compositions plastifiées à base de polydiénediols hydrogénés sont notamment utilisables dans des applications nécessitant des propriétés mécaniques dynamiques dites amortissantes.

Cependant ces compositions sont exclusivement basées sur des polydiénediols hydrogénés et, de plus elles sont plastifiées ce qui en limite certaines propriétés mécaniques telles que la contrainte à la rupture et la dureté.

La demande de brevet Japonaise JP 62/135512 concerne des compositions de polyuréthanne à base d'un mélange de polyols constitué :

- d'un polydiéne polyol liquide et/ou d'huile de ricin et,
- d'un polyol consistant en un copolymère du tétrahydrofurane et d'oxyde d'éthylène et/ou d'oxyde de propylène.

Ces compositions présentent des duretés qui varient peu à basse température.

Cependant, ce document ne mentionne ni ne suggère une quelconque amélioration des propriétés mécaniques, notamment, des propriétés amortissantes.

Il est nécessaire pour certaines applications d'avoir des formulations d'élastomère polyuréthanne qui possèdent des propriétés dites amortissantes dans un domaine de température qui s'échelonne généralement de - 20°C à 100°C.

Par propriétés amortissantes on entend présentement la faculté que possède un matériau à atténuer les nuisances apportées par des vibrations éventuellement sonores.

Les propriétés amortissantes d'un matériau élastomérique -plus ou moins réticulé- sont généralement bien représentées par ses propriétés mécaniques dynamiques et, notamment, par sa tangente delta -ci-après représentée par tg$\delta$- qui est donnée par l'expression :

$$tg\delta = \frac{E''}{E'}$$

dans laquelle

E'' représente le module de perte et
E' représente le module de conservation.

Généralement, dans le domaine présentement considéré on s'accorde à dire qu'un matériau est amortissant quand, par exemple, pour une gamme de température donnée, tg$\delta$ est supérieure à 0,5.

On a maintenant trouvé qu'une formulation d'élastomère polyuréthanne comprenant au moins un polyol polydiénique, de l'huile de ricin, éventuellement au moins un polyol de faible masse molaire et au moins un polyisocyanate ayant au moins deux fonctions isocyanate, caractérisée en ce qu'elle comprend une quantité suffisante d'huile de ricin pour obtenir :

a/ une tangente delta -tg$\delta$- au moins égale à 0,2 et, de préférence comprise entre 0,5 et 1,5, mesurée à la température de transition vitreuse Tg de ladite formulation qui est au moins égale à -20°C, et
b/ une dureté Shore allant de 30 A à 80 D et, de préférence comprise entre 50 A et 60 D, mesurée selon la norme DIN 53505, peut être utilisée comme résine amortissante.

Les valeurs de E' et E'' de l'expression tg$\delta = \frac{E''}{E'}$, exprimée en Mpa sont obtenues en fonction de la température, qui s'échelonne de -120°C à + 150°C, en sollicitant le matériau d'élastomère polyuréthanne en traction dynamique.

L'éprouvette normalisée est enserrée entre les mâchoires d'un spectromètre mécanique, soumise à une prétension puis sollicitée en traction dynamique à une fréquence de 1,66 Hz correspondant à une pulsation de 10 rad/s. La mesure du déphasage entre la contrainte imposée et la contrainte transmise par l'éprouvette donne accès aux valeurs des modules E' et E'' et, par conséquent à tgδ et ceci dans toute la gamme des températures étudiées.

Selon la présente invention, le polyol polydiénique est un oligomère de diène conjugué hydroxytéléchélique qui peut être obtenu par différents procédés tels que la polymérisation radicalaire de diène conjugué ayant de 4 à 20 atomes de carbone en présence d'un amorceur de polymérisation tel que le peroxyde d'hydrogène ou un composé azoïque tel que l'azobis-2,2'[méthyl-2, N-(hydroxy-2 éthyl)propionamide] ou la polymérisation anionique de diène conjugué ayant de 4 à 20 atomes de carbone en présence d'un catalyseur tel que le naphtalène dilithium.

Selon la présence invention le diène conjugué du polyol polydiénique est choisi dans le groupe comprenant le butadiène l'isoprène, le chloroprène, le pentadiène-1,3, le cyclopentadiène

Selon la présente invention on utilisera de préférence un polyol polydiénique à base de butadiène.

On ne sortirait pas de l'invention si on utilisait des oligomères hydroxytélécheliques de butadiène époxydes sur la chaîne.

Selon la présente invention, les polyols polydiéniques peuvent avoir des masses molaires en nombre au plus égale à 7000 et de préférence comprise entre 1000 et 3000. Ils présentent des fonctionnalités allant de 1 à 5 et de préférence de 1,8 à 3.

A titre d'illustration de polyols polydiéniques on citera les polybutadiénes hydroxyles commercialisés par la société ELF ATOCHEM S.A. sous les dénominations Poly Bd ® 45 HT et Poly Bd ® 20 LM.

L'huile de ricin selon la présente invention peut être constituée d'un mélange de glycérides d'acides gras tels que l'acide ricinoléique, l'acide oléique, l'acide linoléïque, l'acide stéarique, l'acide dihydrostéarique.

Elle présente un indice d'hydroxyle compris entre 2 meq/g et 4 meq/g et une viscosité à 20°C compris entre 935 et 1033 mPa.s.

On préfère utiliser selon la présente invention une huile de ricin contenant au moins 85 % de glycéride de l'acide ricinoléique.

On ne sortirait pas de l'invention si on utilisait une huile de ricin partiellement ou totalement hydrogénée ainsi que partiellement ou totalement transestérifiée.

Selon la présente invention, la formulation d'élastomère polyuréthanne peut comprendre en plus de l'huile de ricin, au moins un polyol de faible masse molaire.

Par polyol de faible masse molaire on entend des polyols ayant des masses molaires allant de 50 à 800.

A titre d'illustration de tels polyols on peut citer l'éthylène glycol, le propylène glycol, le diéthylène glycol, le dipropylène glycol, le butane diol-1,4, l'hexane diol-1,6, l'éthyl-2 hexane diol-1,3, le N,N bis(hydroxy-2 propyl)aniline, le méthyl-3 pentanediol-1,5, le triméthylol propane, le pentaérythritol, le bis phénol A propoxylé commercialisé par la société AKZO sous la dénomination DIANOL 320 et le mélange d'au moins deux polyols précités.

Selon la présente invention, le polyisocyanate utilisé peut être un polyisocyanate aromatique, aliphatique ou cycloaliphatique ayant au moins deux fonctions isocyanate dans sa molécule.

A titre d'illustration de polyisocyanate aromatique on citera le 4,4'-diphénylméthane diisocyanate (MDI), les MDI modifiés liquides, les MDI polymériques, le 2,4- et le 2,6-toluylène diisocyanate (TDI) ainsi que leur mélange, le xylylène diisocyanate (XDI), le paraphénylène diisocyanate (PPDI), le 1,5-naphtalène diisocyanate (NDI), le triphénylméthane triisocyanate, le tétraméthylxylylène diisocyanate (TMXDI).

Parmi les polyisocyanates aromatiques, l'invention concerne de préférence le 4,4'-diphenyl méthane diisocyanate et tout particulièrement les MDI modifiés liquides.

A titre d'illustration de polyisocyanate aliphatique on citera l'hexaméthylène diisocyanate (HDI) et ses dérivés, le triméthyhéxaméthylène diisocyanate.

A titre d'illustration de polyisocyanate cycloaliphatique on citera l'isophore diisocyanate (IPDI) et ses dérivés, le 4,4'-dicyclohexylméthanediisocyanate et le cyclohexyl diisocyanate (CHDI).

La quantité de polyisocyanate selon la présente invention est choisie d'une façon telle que le rapport molaire NCO/OH est compris entre 0,6 et 2 et, de préférence, entre 0,8 et 1,2.

On peut utiliser d'autres composés réactifs qui comportent des fonctions susceptibles de réagir avec les fonctions isocyanate ; le rapport molaire devra être calculé en tenant compte de la présence desdites fonctions de ces composés réactifs.

S'agissant desdits composés réactif susceptibles de rentrer dans la formulation selon la présente invention on peut citer des diamines ayant des masses molaires allant de 60 à 5000.

A titre d'illustration de telles diamines on peut citer l'éthylène diamine, la diphényl méthane diamine, l'isophoronediamine les polyxypropylènes, les polyoxytétraméthylènes et les polybutadiènes terminés par des fonctions amine.

Les propriétés mécaniques et amortissantes des formulations pourront être atteintes moyennant l'emploi d'au moins 25 parties en poids d'huile de ricin pour 100 parties en poids de polyol polydiénique, et, de préférence 50 à 150 parties en poids.

Dans la variante ou, en plus de l'huile de ricin, la formulation comprend au moins un polyol de faible masse molaire, on utilisera au plus 100 parties en poids d'au moins un polyol de faible masse molaire pour 100 parties en poids de polyol polydiénique et, de préférence 5 à 50 parties en poids.

Bien que l'emploi d'un catalyseur ne soit pas indispensable on pourra dans certains cas, si on le désire. utiliser un catalyseur qui peut être choisi dans le groupe comprenant des amines tertiaires, des imidazoles, des composés organométalliques

A titre d'illustration d'amines tertiaires on peut citer le diaza-1,4bicyclo[2.2.2]octane (DABCO), la N,N,N',N'',N''-pentaméthyldiéthylène triamine

A titre d'illustration de composés organométalliques on peut citer le dibutyldilaurate d'étain, le dibutylacétate d'étain.

La formulation d'élastomère polyuréthanne peut être obtenue selon un procédé dit procédé "one shot" qui consiste à mélanger un polyol polydiénique, une huile de ricin, éventuellement un polyol de faible masse molaire, en présence éventuellement d'un catalyseur et de charges ou autre additifs dans un réacteur sous agitation mécanique à une température qui peut aller de l'ambiante (20°C) à 100°C, à pression atmosphérique ou sous pression réduite.

Au mélange ainsi obtenu on ajoute un polyisocyanate, on homogénéise pendant une durée qui peut aller de 1 à 5 mn , puis on coule la masse réactionnelle qui est abandonnée à température ambiante pendant au moins 24 heures, temps au bout duquel la réticulation est quasi totale.

A titre d'illustration d'additifs qui peuvent être introduits dans la formulation on peut citer les agents anti-UV, les antioxydants, les résines tackifiantes.

S'agissant des charges qui peuvent être ajoutées on citera le carbonate de calcium, le sulfate de baryum, la silice, les hydroxydes de magnésium et d'aluminium le titane. le talc, le graphite, les argiles, les microsphères creuses de silice, le noir de carbone. Des bitumes pétroliers, des brais de houille peuvent également être incorporés dans les formulations.

En réglant les proportions d'huile de ricin et éventuellement de polyol de faible masse molaire on obtient des formulations d'élastomère polyuréthanne qui présentent de bonnes propriétés amortissantes dans un domaine de température allant d'environ -20°C à environ 100°C.

De plus, ces formulations possèdent une résistance à la traction, à la déchirure et une dureté supérieures aux formulations à base seulement de polyol polydiénique.

Les formulations trouvent leurs applications, notamment comme résines amortissantes dans des compositions multicouches telles que tôle sandwich acier/résine/acier ou dans des tôles revêtues utilisées dans des applications automobile (caisse, dessous de caisse) ou encore dans des applications industrielles (insonorisation de compresseurs, de machines à laver et autres appareils électroménagers).

Les exemples suivants illustrent l'invention.

Les formulations ont été préparées en utilisant les constituants suivants :

- PolyBd ® 45 HT : polybutadiène hydroxylé de Mn égale à 2800 (déterminée par chromatographie d'exclusion stérique), présentant un indice d'hydroxyde $I_{OH}$ exprimé en milliéquivalent par gramme (meq/g) égal à 0,83, une viscosité (mPa.s à 30°C) égale à 5000 et une densité égale à 0,90 ;
- PolyBd ® 20 LM : polybutadiène hydroxylé de Mn égale à 1300, présentant un $I_{OH}$ égal à 1,70 meq/g, une viscosité égale à 1600 mPa.s à 30°C et une densité égale à 0,90 ;
- huile de ricin : mélange de glycérides d'acides gras contenant au moins 85 % en poids d'acide ricinoléique, présentant un $I_{OH}$ égal à 2,93 meq/g et une viscosité dynamique égale à 600 mPa.s à 30°C ;
- Ethyl-2 hexanediol-1,3 ;
- N,N bis(hydroxy-2 propyl) aniline commercialisé par la société Dow Chemical sous la dénomination VORANOL RA 100.
- MDI 143 : polyisocyanate modifié liquide contenant 80 % en poids de MDI monomère et 20 % en poids d'un MDI modifié, présentant un pourcentage de fonction NCO égal à 29 % commercialisé par la société Dow Chemical sous la dénomination ISONATE 143.

Préparation des formulations

Les formulations ont été préparées selon la technologie dite procédé "one shot".

Le PolyBd, l'huile de ricin et les polyols de faible masse molaire (Voranol RA 100 ou éthyl-2 hexanediol-1,6) sont introduits, selon des proportions indiquées dans les tableaux 1, 2 et 3, dans un réacteur puis mélangés par un agitateur mécanique tournant à 200 tr/mn pendant une durée de 1 heure à une température de 80°C et sous pression réduite.

On ajoute ensuite le polyisocyanate dans un rapport NCO/OH.

tel qu'indiqué dans les tableaux 1, 2 et 3, on homogénéise pendant 2 minutes puis on coule la masse réactionnelle dans un moule. On laisse ensuite réticuler à température ambiante pendant 24 heures.

Dans les tableaux 1, 2 et 3 les proportions des divers constituants des formulations sont exprimées en parties en poids.

Sur le produit élastomérique réticulé obtenu, on découpe des éprouvettes normalisées sur lesquelles on détermine les propriétés mécaniques suivantes :

Propriétés mécaniques dites dynamométriques

- allongement et contrainte à la rupture déterminés selon la norme DIN 53504
- déchirure effectuée sur des éprouvettes dites "pantalon" selon la norme ISO R 34
- dureté Shore selon la norme DIN 53505

Propriétés mécaniques dites dynamiques

La transition vitreuse Tg (en °C), la tangente delta à la transition vitreuse Tg et le Module d'élasticité E' à 20°C (en MPa) sont déterminés sur un spectromètre mécanique Type RSA 2, commercialisé par la société Rhéométrics.

Les déterminations sont effectuées sur des éprouvettes de dimensions 22.6.2 mm, sollicitées en traction dynamique avec une pulsation de 10 rad/s ce qui correspond à une fréquence de 1,66 Hz.

Les manipulations sont effectuées entre - 120°C et +150°C à la fréquence telle que mentionnée ci-dessus.

A partir des courbes on a accès au module E' à 20°C, à la tg$\delta$ et à la Tg.

Dans les tableaux 1 et 2 nous avons reporté les résultats des essais mécaniques dynanométriques et dans le tableau 3 les propriétés mécaniques dites amortissantes.

L'introduction d'huile de ricin dans des formulations à base du polyol polydiénique Poly Bd ® 45 HT -exemples 6 à 10 du tableau 1- entraîne une forte augmentation de la déchirure, de la contrainte à la rupture et de la dureté des formulations par rapport aux formulations de référence exemples 1 à 5, tableau 1.

Des résultats équivalents sont obtenus avec des formulations à base du polyol polydiénique Poly Bd ® 20 LM. Ces résultats sont explicités dans le tableau 2, en comparant les propriétés mécaniques des formulations des exemples 16 à 20 selon l'invention aux formulations de référence des exemples 11 à 15.

Quant aux propriétés amortissantes (tableau 3) on constate que les formulations exemptes d'huile de ricin des exemples 1, 4 et 5 sont amortissantes à basse températures (-60°C) et le module E' à température ambiante est faible.

L'introduction d'huile de ricin dans des formulations aussi bien à base de Poly Bd ® 45 HT exemples 6, 8, 10 et 21 -qu'à base de Poly Bd ® 20 LM exemples 16 à 20 permet d'obtenir des propriétés amortissantes sur des plages de température utile allant d'environ - 20°C à + 80°C.

En effet, pour ces formulations tg$\delta$ est compris entre 0,78 et 0,91 et, de plus les modules E' à température ambiante sont très élevés et atteignent 500 MPa ce qui confère au matériau d'élastomère polyuréthanne de bonnes propriétés mécaniques comme par exemple une bcnne résistance à la compression.

On peut noter également que l'utilisation d'un polyol de faible masse molaire (Voranol RA 100 ou éthyl-2 hexanediol-1,3) permet de contrôler avantageusement la position de la Tg de 0°C à + 60°C avec des valeurs de tg$\delta$ élevées.

| CONSTITUANTS DE LA FORMULATION | EXEMPLES | | | | | | | | | |
|---|---|---|---|---|---|---|---|---|---|---|
| | 1 | 2 | 3 | 4 | 5 | 6 | 7 | 8 | 9 | 10 |
| Poly Bd ® 45 HT | 100 | 100 | 100 | 100 | 100 | | 50 | 50 | 50 | 50 |
| Huile de Ricin | | | | | | 50 | 50 | 50 | 50 | 50 |
| Voranol RA 100 | | 10 | 20 | 10 | 20 | | | | 10 | 15 |
| Ethyl-2 hexanediol-1,3 | | | | | | | 10 | 20 | | |
| Rapport NCO/OH | 1,05 | 1,05 | 1,05 | 1,05 | 1,05 | 1,05 | 1,05 | 1,05 | 1,05 | 1,05 |
| **PROPRIETES MECANIQUES** | | | | | | | | | | |
| Allongement à la rupture (%) | 100 | 258 | 208 | 296 | 198 | 110 | 168 | 164 | 192 | 206 |
| Contrainte à la rupture (MPa) | 1 | 7,9 | 14 | 6,4 | 11,5 | 2,3 | 16,7 | 23,6 | 13,1 | 15,7 |
| Dechirure (N/mm) | 2,5 | 20,4 | 29,1 | 18,4 | 29,6 | 9,3 | 50 | 123 | 45 | 85 |
| Dureté Shore (A ou D) | 45A | 63A | 71A | 61A | 73A | 50A | 31D | 60D | 83A | 45D |

**TABLEAU 1**

| CONSTITUANTS DE LA FORMULATION | EXEMPLES | | | | | | | | | |
|---|---|---|---|---|---|---|---|---|---|---|
| | 11 | 12 | 13 | 14 | 15 | 16 | 17 | 18 | 19 | 20 |
| Poly Bd ® 20 LM | 100 | 100 | 100 | 100 | 100 | 50 | 50 | 50 | 50 | 50 |
| Huile de Ricin | | | | | | 50 | 50 | 50 | 50 | 50 |
| Voranol RA 100 | | | | 10 | 20 | | | | 10 | 20 |
| Ethyl-2 Hexanediol-1,3 | | 10 | 20 | | | | 10 | 20 | | |
| Rapport NCO/OH | 1,05 | 1,05 | 1,05 | 1,05 | 1,05 | 1,05 | 1,05 | 1,05 | 1,05 | 1,05 |
| **PROPRIETES MECANIQUES** | | | | | | | | | | |
| Allongement à la rupture (%) | 113 | 292 | 220 | 303 | 256 | 110 | 182 | 152 | 208 | 201 |
| Contrainte à la rupture (MPa) | 2 | 11,9 | 18,7 | 10,6 | 18,8 | 2,2 | 15,3 | 26,7 | 14,5 | 23,8 |
| Dechirure (N/mm) | 5 | 20,8 | 59,8 | 19,2 | 59,9 | 7,5 | 34 | 113 | 32 | 94 |
| Dureté Shore (A ou D) | 48A | 49A | 85A | 56A | 82A | 55A | 23D | 60D | 25D | 51D |

**TABLEAU 2**

**TABLEAU 3**

**EXEMPLES**

| CONSTITUANTS DE LA FORMULATION | 1 | 4 | 5 | 6 | 8 | 10 | 21 | 16 | 17 | 18 | 19 | 20 |
|---|---|---|---|---|---|---|---|---|---|---|---|---|
| Poly Bd ® 45 HT | 100 | 100 | 100 | 50 | 50 | 50 | 50 | | | | | |
| Poly Bd ® 20 LM | | | | | | | | 50 | 50 | 50 | 50 | 50 |
| Huile de Ricin | | | | 50 | 50 | 50 | 50 | 50 | 50 | 50 | 50 | 50 |
| Voranol RA 100 | | 10 | 20 | | 20 | 15 | 20 | | | | 10 | 20 |
| Ethyl-2 hexanediol-1,3 | | | | | | | | | 10 | 20 | | |
| Rapport NCO/OH | 1,05 | 1,05 | 1,05 | 1,05 | 1,05 | 1,05 | 1,05 | 1,05 | 1,05 | 1,05 | 1,05 | 1,05 |
| **PROPRIETES MECANIQUES** | | | | | | | | | | | | |
| Tg(°C) | -60 | -60 | -60 | -2 | 62 | 50 | 59 | 3 | 30 | 56 | 32 | 46 |
| tgδ (à la Tg) | 0,79 | 0,49 | 0,40 | 0,91 | 0,94 | 0,82 | 0,84 | 0,87 | 0,78 | 0,78 | 0,78 | 0,78 |
| Module E' (MPa) à 20°C | 3 | 10 | 30 | 2,5 | 500 | 320 | 500 | 4 | 105 | 460 | 100 | 400 |

## Revendications

1. Utilisation comme résine amortissante d'une formulation d'élastomère polyuréthanne comprenant au moins un polyol polydiénique, de l'huile de ricin, éventuellement au moins un polyol de faible masse molaire, et au moins un polyisocyanate ayant au moins deux fonctions isocyanate, caractérisée en ce qu'elle comprend une quantité suffisante d'huile de ricin pour obtenir :

a/ une tangente delta -tgδ- au moins égale à 0,2, mesurée à la température de transition vitreuse Tg de ladite formulation qui est au moins égale à -20°C, et
b/ une dureté Shore allant de 30 A à 80 D mesurée selon la norme DIN 53505.

2. Utilisation selon la revendication 1, caractérisée en ce que tgδ est comprise entre 0,5 et 1,5.

3. Utilisation selon la revendication 1, caractérisée en ce que la dureté Shore est comprise entre 50 A et 60 D.

4. Utilisation selon la revendication 1, caractérisée en ce que l'huile de ricin est un mélange de glycérides d'acides ricinoléique, oléique, linoléique stéarique, dihydrostéarique.

5. Utilisation selon la revendication 4, d'une formulation caractérisée en ce que l'huile de ricin comprend au moins 85 % de glycéride de l'acide ricinoléique.

6. Utilisation selon l'une des revendications 1 à 5, d'une formulation qui comprend au moins 25 parties en poids d'huile de ricin pour 100 parties en poids de polyol polydiénique.

7. Utilisation selon la revendication 6, d'une formulation qui comprend 50 à 150 parties en poids d'huile de ricin pour 100 parties en poids de polyol polydiénique.

8. Utilisation selon la revendication 1, d'une formulation caractérisée en ce que le polyol polydiénique est un oligomère de diène conjugué hydroxytéléchélique.

9. Utilisation selon la revendication 8, d'une formulation caractérisée en ce que le diène conjugué est le butadiène.

10. Utilisation selon la revendication 1, d'une formulation caractérisée en ce que le polyol polydiénique a une masse molaire en nombre au plus égale à 7000.

11. Utilisation selon la revendication 10, d'une formulation caractérisée en ce que le polyol polydiénique a une masse molaire en nombre compris entre 1000 et 3000.

12. Utilisation selon la revendication 1, d'une formulation caractérisée en ce que le polyol polydiénique présente une fonctionalité allant de 1 à 5.

13. Utilisation selon la revendication 1, d'une formulation caractérisée en ce que le polyisocyanate est un polyisocyanate aromatique.

14. Utilisation selon la revendication 13, d'une formulation caractérisée en ce que le polyisocyanate aromatique est un MDI modifié liquide.

15. Utilisation selon la revendication 1, d'une formulation caractérisée en ce qu'elle comprend au moins un polyol de faible masse molaire.

16. Utilisation selon la revendication 15, d'une formulation dans laquelle le polyol a une masse molaire allant de 50 à 800.

17. Utilisation selon la revendication 15, d'une formulation dans laquelle on utilise au plus 100 parties en poids d'au moins un polyol de faible masse molaire pour 100 parties en poids de polyol polydiénique.


**Patentansprüche**

1. Verwendung einer Polyurethan-Elastomer-Formulierung als dämpfendes Harz, die mindestens ein Polydienpolyol, Ricinusöl, gegebenenfalls mindestens ein Polyol geringer Molmasse und mindestens ein Polyisocyanat mit mindestens zwei Isocyanatgruppen enthält,

dadurch gekennzeichnet, daß
die Formulierung Ricinusöl in eine Menge enthält, die ausreicht, um zu erhalten:

a) eine Delta-Tangente - tgδ - von mindestens 0,2, die bei der Glasübergangstemperatur Tg der Formulierung gemessen wird, die mindestens -20 °C beträgt, und
b) eine Shore-Härte von 30 A bis 80 D, die gemäß der DIN-Norm 53505 gemessen wird.

2. Verwendung nach Anspruch 1, dadurch gekennzeichnet, daß tgδ im Bereich von 0,5 bis 1,5 liegt.

3. Verwendung nach Anspruch 1, dadurch gekennzeichnet, daß die Shore-Härte im Bereich von 50 A bis 60 D liegt.

4. Verwendung nach Anspruch 1, dadurch gekennzeichnet, daß das Ricinusöl ein Gemisch aus Glyceriden der Ricinolsäure, Ölsäure, Linolsäure, Stearinsäure, Dihydrostearinsäure ist.

5. Verwendung nach Anspruch 4 einer Formulierung, die dadurch gekennzeichnet ist, daß das Ricinusöl mindestens 85 % Glycerid der Ricinolsäure enthält.

6. Verwendung nach einem der Ansprüche 1 bis 5 einer Formulierung, die mindestens 25 Gewichtsteile Ricinusöl pro 100 Gewichtsteile Polydienpolyol enthält.

7. Verwendung nach Anspruch 6 einer Formulierung, die 50 bis 150 Gewichtsteile Ricinusöl pro 100 Gewichtsteile Polydienpolyol enthält.

8. Verwendung nach Anspruch 1 einer Formulierung, die dadurch gekennzeichnet ist, daß das Polydienpolyol ein hydroxytelecheles Oligomer eines konjugierten Diens ist.

9. Verwendung nach Anspruch 8 einer Formulierung, die dadurch gekennzeichnet ist, daß es sich bei dem konjugierten Dien um Butadien handelt.

10. Verwendung nach Anspruch 1 einer Formulierung, die dadurch gekennzeichnet ist, daß das Polydienpolyol ein Zahlenmittel der Molmasse von höchstens 7000 aufweist.

11. Verwendung nach Anspruch 10 einer Formulierung, die dadurch gekennzeichnet ist, daß das Polydienpolyol ein Zahlenmittel der Molmasse von 1000 bis 3000 aufweist.

12. Verwendung nach Anspruch 1 einer Formulierung, die dadurch gekennzeichnet ist, daß das Polydienpolyol eine Funktionalität von 1 bis 5 aufweist.

13. Verwendung nach Anspruch 1 einer Formulierung, die dadurch gekennzeichnet ist, daß das Isocyanat ein aromatisches Polyisocyanat ist.

14. Verwendung nach Anspruch 13 einer Formulierung, die dadurch gekennzeichnet ist, daß das aromatische Polyisocyanat ein flüssiges modifiziertes MDI ist.

15. Verwendung nach Anspruch 1 einer Formulierung, die dadurch gekennzeichnet ist, daß sie mindestens ein Polyol geringer Molmasse enthält.

16. Verwendung nach Anspruch 15 einer Formulierung, deren Polyol eine Molmasse von 50 bis 800 aufweist.

17. Verwendung nach Anspruch 15 einer Formulierung, in der höchstens 100 Gewichtsteile mindestens eines Polyols geringer Molmasse pro 100 Gewichtsteile Polydienpolyol verwendet werden.

**Claims**

1. Use as a damping resin of a polyurethane elastomer formulation comprising at least one polydiene polyol, castor oil, possibly at least one low-molecular-weight polyol, and at least one polyisocyanate having at least two isocyanate functions, characterized in that it comprises a sufficient quantity of castor oil in order to obtain:

a/ a loss tangent - tan δ - at least equal to 0.2, measured at the glass transition temperature $T_g$ of the said formulation, which is at least equal to -20°C, and

b/ a Shore hardness ranging from 30 A to 80 D, measured according to the DIN 53505 standard.

2. Use according to Claim 1, characterized in that tan δ is between 0.5 and 1.5.

3. Use according to Claim 1, characterized in that the Shore hardness is between 50 A and 60 D.

4. Use according to Claim 1, characterized in that the castor oil is a mixture of glycerides of ricinoleic, oleic, linoleic, stearic and dihydroxystearic acids.

5. Use according to Claim 4, of a formulation characterized in that the castor oil comprises at least 85 % of the glyceride of ricinoleic acid.

6. Use according to one of Claims 1 to 5, of a formulation which comprises at least 25 parts by weight of castor oil per 100 parts by weight of polydiene polyol.

7. Use according to Claim 6, of a formulation which comprises 50 to 150 parts by weight of castor oil per 100 parts by weight of polydiene polyol.

8. Use according to Claim 1, of a formulation characterized in that the polydiene polyol is a hydroxytelechelic conjugated-diene oligomer.

9. Use according to Claim 8, of a formulation characterized in that the conjugated diene is butadiene.

10. Use according to Claim 1, of a formulation characterized in that the polydiene polyol has a number-average molecular weight at most equal to 7000.

11. Use according to Claim 10, of a formulation characterized in that the polydiene polyol has a number-average molecular weight between 1000 and 3000.

12. Use according to Claim 1, of a formulation characterized in that the polydiene polyol has a functionality ranging from 1 to 5.

13. Use according to Claim 1, of a formulation characterized in that the polyisocyanate is an aromatic polyisocyanate.

14. Use according to Claim 13, of a formulation characterized in that the aromatic polyisocyanate is a liquid modified MDI.

15. Use according to Claim 1, of a formulation characterized in that it comprises at least one low-molecular-weight polyol.

16. Use according to Claim 15, of a formulation in which the polyol has a molecular weight ranging from 50 to 800.

17. Use according to Claim 15, of a formulation in which at most 100 parts by weight of at least one low-molecular-weight polyol per 100 parts by weight of polydiene polyol are used.